# EUROPÄISCHE PATENTSCHRIFT

(11) **EP 3 464 406 B1**
(45) Veröffentlichungstag und Bekanntmachung des Hinweises auf die Patenterteilung: **04.03.2020**
(21) Anmeldenummer: 17729060.8
(22) Anmeldetag: 01.06.2017
(51) Int. Cl.: C08K 5/3475, C08K 5/3472, B32B 29/00, B32B 27/32, B32B 27/30, B32B 15/20, B32B 15/18, B32B 15/04, B32B 5/18, B29C 67/24, B32B 27/06, B32B 27/08, B32B 27/40, B29C 45/14, C08K 3/22, C08G 18/48, C08G 18/32, C08G 18/66, C08G 18/10

(54) **MEHRSCHICHTAUFBAU, DESSEN HERSTELLUNG UND VERWENDUNG**
MULTILAYER STRUCTURE, ITS PREPARATION AND USE
STRUCTURE MULTICOUCHES, SA FABRICATION ET SON UTILISATION

(30) Priorität: 07.06.2016 EP 16173240; 17.06.2016 EP 16175009
(43) Veröffentlichungstag der Anmeldung: 10.04.2019
(73) Patentinhaber: Covestro Deutschland AG, 51373 Leverkusen (DE)
(72) Erfinder: KÜHN, Frauke, 50668 Köln (DE); MURLOWSKI, Gregor, 51109 Köln (DE); EISEN, Norbert, 50999 Köln (DE)
(74) Vertreter: Levpat
(86) Internationale Anmeldenummer: PCT/EP2017/063279
(87) Internationale Veröffentlichungsnummer: WO 2017/211671

(56) Entgegenhaltungen:
- EP-A1- 0 826 708
- EP-A1- 1 927 466
- WO-A1-2009/106498

## Beschreibung

Die Erfindung betrifft einen Mehrschichtaufbau aus mindestens drei Schichten, ein Verfahren zu dessen Herstellung und dessen Verwendung.
EP 0 629 498 A1 beschreibt einen Mehrschichtaufbau aus verschiedenen Acryl-Butadien-Styrol (ABS)-Typen. Die Eigenschaften der Schichten können bezüglich verschiedener Eigenschaften (Chemikalienbeständigkeit, Wärmestabilität, Schlagzähigkeit, Härte und Verarbeitbarkeit) eingestellt werden. Das Material muss danach im Thermoform-Verfahren verarbeitet werden, was die Geometrie-Vielfalt stark einschränkt und sehr energieaufwendig ist.
WO 2014/108067 A1 beschreibt eine Isolierungskomponente aus einem inneren Isolationsschaum, der von einer nahtlosen Schicht aus steifem Polymer umgeben ist. Die äußere Schicht wird durch RIM (Reaction Injection Molding) hergestellt. Die Schaumkomponente wird dabei in der Form fixiert, die Reaktionsmischung zur Herstellung der äußeren Schicht wird injiziert und durch den RIM Prozess hergestellt. Das Bauteil kann zum Beispiel als Tür in einem Kühlschrank dienen. Das Bauteil kommt durch das Zusammenführen von verschiedenen Teilen ohne Nähte aus. Über die Optik der Oberfläche und über die Lichtechtheit der Komponenten, die besonders wichtig ist, wenn das Bauteil als Außenseite eines Kühlschranks verwendet wird, wird keine Aussage getroffen. Ebenso ist es unklar, wie Anbauteile wie z.B. Griffe, Lichter etc. in das Bauteil integriert werden können.
Aufgabe der vorliegenden Erfindung war es daher, ein Mehrschichtsystem sowie ein einfach durchzuführendes Verfahren zur Herstellung eines Mehrschichtsystems zur Verfügung zu stellen, wobei das Mehrschichtsystem eine Schicht mit guter UV-Stabilität und geringen Mengen flüchtiger Bestandteile und niedrigen Migrationswerten in Öl und Wasser aufweist, und wobei diese Schicht gegebenenfalls lebensmittelbeständig ist.
Es wurde überraschenderweise gefunden, dass glykolvernetzte Polyurethanelastomere für eine äußere Schicht eines Mehrschichtaufbaus die gestellte Aufgabe lösen, wenn die eingesetzten Polyether- und/oder Polyesterpolyole eine Funktionalität aufweisen, die mindestens 2 beträgt, und die bei der Herstellung der eingesetzten NCO-Prepolymere verwendeten Polyether- und/oder Polyesterpolyole ebenfalls eine Funktionalität von mindestens 2 aufweisen.

Gegenstand der Erfindung ist daher ein Mehrschichtsystem aus mindestens drei Schichten mit folgender Schichtenfolge: (i) einer ersten äußeren Schicht (1), (ii) einer mittleren Kernschicht aus einem Polyurethanhartschaum mit einer thermischen Leitfähigkeit λ≤24mW/m^{∗}K gemäß DIN 52616 bei 24°C und (iii) einer zweiten äußeren hydrolysebeständigen Polyurethanschicht (2), dadurch gekennzeichnet, dass das Polyurethan der zweiten äußeren Schicht (2) aus der Reaktion der folgenden Komponenten herstellbar ist:
einer Polyolkomponente bestehend aus
   a) mindestens einem Polyol aus der Gruppe bestehend aus Polyetherpolyol, Polyesterpolyol und einem Gemisch daraus jeweils mit einem zahlenmittleren Molekulargewicht von 1000 bis 12000 g/mol und einer zahlenmittleren Funktionalität von mindestens 2,
   b) mindestens einem glykolischen Kettenverlängerer mit zwei Hydroxylgruppen pro Molekül und einem Molekulargewicht von 62 bis 499 g/mol
   c) mindestens einem Polyetherpolyol mit einer zahlenmittleren Funktionalität von 3 bis 6 und einem zahlenmittleren Molekulargewicht von 200 bis 900 g/mol
   d) mindestens einem Katalysator
   e) mindestens einem anorganischen Weißpigment, das im Polyol a) dispergierbar ist,
   f) mindestens einem UV-Absorber aus der Triazolklasse, der im Polyol a) löslich oder dispergierbar ist,
   g) gegebenenfalls Hilfs- und/oder Zusatzstoffen,
      und einer Isocyanatkomponente bestehend aus
   h) einem NCO-Prepolymeren mit einem NCO-Gehalt von höchstens 28 Gew.-%, basierend auf mindestens einem Polyisocyanat aus der Gruppe bestehend aus 4,4'-Methylendiphenyldiisocyanat (MDI), 2,2'-MDI, 2,4'-MDI, deren höheren Homologen, Gemischen daraus, 4,4'-Diisocyanatodicyclohexylmethan (HMDI), 2,2'-HMDI, 2,4'-HMDI, deren höhere Homologen und Gemische daraus und mindestens einem Polyol aus der Gruppe bestehend aus Polyetherpolyol, Polyesterpolyol und Gemischen daraus jeweils mit einem zahlenmittleren Molekulargewicht von 150 bis 12000 g/mol und einer zahlenmittleren Funktionalität von mindestens 2
wobei, bezogen auf die Summe der Komponenten a), b), c), d) und h) das Polyol a) in Mengen von 25 bis 50 Gew.-%, bevorzugt 30 bis 40 Gew.-%, der Kettenverlängerer b) in Mengen von 6 bis 14 Gew.-%, bevorzugt 8 bis 12 Gew.-%, das Polyetherpolyol c) in Mengen von 2-10 Gew.-%, der Katalysator d) in Mengen von 0,05 bis 0,5 Gew.-%, bevorzugt 0,1 bis 0,4 Gew.-%, das anorganische Weißpigment e) in Mengen von 0,1 bis 5 Gew.-%, der UV-Absorber f) in Mengen von 0,1 bis 5 Gew.-% und die Isocyanatkomponente mit der Polyolkomponente in einem Verhältnis der NCO-Gruppen zu den OH-Gruppen von 0,9 bis 1,2 zu 1 eingesetzt werden und
wobei das Polyurethan einen TVOC (totale volatile organic components) -Gehalt von unter 3000µg TÄ/Nm³ gemäß DIN EN ISO 16000-9 nach 24h Lagerung bei Raumtemperatur und einem Luftwechsel von 0,5m³/h, einer Temperatur von 23°C und einer relativen Feuchte von 50% und einen ΔE -Wert von kleiner 13 nach 500h Belichtung gemäß DIN ISO 16474-2, Teil 2 Xenonbogenlampen, nach Verfahren B (Xenonbogenlampe mit Fensterglasfiltern, 50 W/m² Bestrahlungsstärke bei 300-400 nm, 38°C Probenraumtemperatur, 65°C Schwarzstandardtemperatur und 50% relative Luftfeuchte) aufweist,
und das Polyurethan der mittleren Kernschicht aus der Reaktion der folgenden Komponenten herstellbar ist:
   A) mindestens einem Polyol aus der Gruppe bestehend aus Polyether-, Polyester- und Polyesterpolyetherpolyolen
   B) aromatischen Polyisocyanaten
   C) physikalischen Treibmitteln
   D) Wasser
   E) gegebenenfalls Katalysatoren
   F) gegebenenfalls Hilfs- und /oder Zusatzstoffen
wobei das Polyurethan der mittleren Kernschicht chemisch nicht mit dem Polyurethan der zweiten äußeren Schicht (2) identisch ist.

Chemische Identität liegt vor, wenn alle Reaktionskomponenten der mittleren Kernschicht in Menge und chemischer Struktur identisch sind mit allen Reaktionskomponenten der zweiten äußeren Schicht (2).

Die erste äußere Schicht (1) des Mehrschichtsystems kann aus verschiedenen Werkstoffen bestehen, wobei der eingesetzte Werkstoff - soweit es sich um Polyurethan handelt - chemisch nicht identisch ist mit dem Polyurethan der mittleren Kernschicht.

Chemische Identität liegt vor, wenn alle Reaktionskomponenten der mittleren Kernschicht in Menge und chemischer Struktur identisch sind mit allen Reaktionskomponenten der äußeren Schicht (1).

Das Mehrschichtsystem aus mindestens drei Schichten ist ein sogenanntes Sandwichbauteil.

Als Komponente a) werden für das Polyurethan der zweiten äußeren Schicht (2) besonders bevorzugt Polyole eingesetzt, die ein zahlenmittleres Molekulargewicht von 1000 bis 8000 g/mol und eine zahlenmittlere Funktionalität von 3 bis 6 aufweisen.

Als Polyol in der Komponente h) werden für das Polyurethan der zweiten äußeren Schicht (2) besonders bevorzugt Polyole eingesetzt, die ein zahlenmittleres Molekulargewicht von 150 bis 8000 g/mol und eine zahlenmittlere Funktionalität von 3 bis 6 aufweisen.

Derartige als Komponente a) bzw.als Polyol in Komponente h) eingesetzte Polyole sind dem Fachmann bekannt und beispielsweise in G. Oertel Kunststoffhandbuch, Band 7, Carl Hanser Verlag, 3. Auflage, München/Wien 1993, S. 57 bis 75 näher beschrieben.

Der Aufbau der Polyetherpolyole kann in bekannter Weise durch Alkoxylierung von entsprechenden Starterverbindungen bewerkstelligt werden, wobei als Alkoxylierungsagenzien bevorzugt Ethylenoxid und/oder Propylenoxid verwendet werden. Als Starter werden bevorzugt solche hydroxylgruppenhaltige Verbindungen ausgewählt, die eine zahlenmittlere Funktionalität von mindestens 2 aufweisen. Als Starterverbindungen kommen beispielsweise in Betracht Sorbit, Succrose, Pentaerythrit, Glycerin, Trimethylolpropan, Propylenglykol, Ethylenglykol, Butylenglykol und Wasser.

Die Polyesterpolyole werden ebenfalls in bekannter Weise aufgebaut durch Polykondensation von mehrfunktionellen Carbonsäuren mit entsprechenden Hydroxylverbindungen, durch Polykondensation von Hydroxycarbonsäuren, durch Polymerisation von Ringestern (Lactonen), durch Polyaddition von Carbonsäureanhydriden mit Epoxiden sowie durch Umsetzung von Säurechloriden mit Alkalisalzen von Hydroxylverbindungen. Bevorzugt werden die Polyester durch Polykondensation von mehrfunktionellen Carbonsäuren wie beispielsweise Phthalsäure, Isophthalsäure, Terephthalsäure, Fumarsäure, Glutarsäure, Adipinsäure und Bernsteinsäure, mit geeigneten Hydroxylverbindungen wie beispielsweise Ethylenglykol, Diethylenglykol, Tetraethylenglyol, 1,2-Propandiol, 1,4-Butandiol, 1,6-Hexandiol, Glycerin und Trimethylolpropan hergestellt.

Als glykolische Kettenverlängerer b) für das Polyurethan der zweiten äußeren Schicht (2) werden solche mit 2 Hydroxylgruppen pro Molekül und einem Molekulargewicht von 62 bis 499 g/mol eingesetzt. Zu erwähnen sind beispielsweise Ethylenglykol, Butylenglykol, Bis-(hydroxyethyl)hydrochinon, Bis-(hydroxyethyl)-bisphenol A, insbesondere Ethylenglykol, 1,4-Butandiol, 1,3-Butandiol sowie 1,4-Bis-(2-hydroxyethyl)hydrochinon oder beliebige Gemische daraus.

Als Polyetherpolyole c) werden solche mit einer zahlenmittleren Funktionalität von 3 bis 6 und einem zahlenmittleren Molekulargewicht von 200 bis 900 g/mol eingesetzt.

Als Katalysatoren d) für die Herstellung der Polyurethanelastomeren der zweiten äußeren Schicht (2) kommen alle bekannten Katalysatoren bzw. Katalysatorsysteme in Betracht, die in der Polyurethanchemie bekannt sind. Verwiesen wird in diesem Zusammenhang beispielsweise auf das oben erwähnte Kunststoffhandbuch, Band 7 (Polyurethane), 3., neu bearbeitete Auflage, Carl Hanser Verlag, München/Wien 1993, Seite 104 ff. Besonders zu erwähnen sind insbesondere Katalysatoren auf Basis von tertiären Aminen, wie Diazobicyclo[2.2.2]octan, N-Methylimidazol, Dimethylaminopropylamin, 1,5-Diazabicyclo[4.3.0]non-5-en, und 1,8-Diazabicyclo[5.4.0]undec-7-en, sowie metallorganische Verbindungen, wie Dialkylzinnalkylmercaptide, Dialkylzinncarboxylate, Zinn(II)-carboxylate, Zinkcarboxylate, Dialkoxytitancarboxylate und Titanacetylacetonat.

Als anorganisches Weißpigment e) werden vorzugsweise Titandioxid und Zinkoxid eingesetzt. Das Pigment wird in einer Menge von 0,1 bis 5 Gew.-%, bezogen auf die Summe der Komponenten a), b), c), d) und h) eingesetzt. In einer bevorzugten Ausführungsform kann das Weißpigment in Form einer Farbpaste eingesetzt werden. Dabei wird das Pigment in einem Dispergiermittel dispergiert. Als Dispergiermittel können vorzugsweise die vorgenannten Polyole a) verwendet werden.
Die Farbpaste wird bevorzugt in Mengen von 0,5-20 Gew.-%, bezogen auf die Summe der Komponenten a), b), c), d) und h) zugefügt.
Als UV-Absorber f) werden Verbindungen der Triazolklasse, wie zum Beispiel 2-(2H-Benzotriazol-2-yl)-4,6-bis(1-methyl-1-phenylethyl)phenol eingesetzt. Diese sind bei Raumtemperatur in der Polyolkomponente in einer Menge von 0,5-8 Gew.-% löslich oder dispergierbar. Als Triazole werden heterocyclische aromatische Verbindungen mit der Formel C₂H₃N₃ bezeichnet, welche einen fünfatomigen Ring mit zwei Kohlenstoff- und drei Stickstoff-Atomen enthalten.

Als Polyisocyanate in der Komponente h) für das Polyurethan der zweiten äußeren Schicht (2) kommen die an sich bekannten MDI-Isomeren, ihre Gemische und ihre höheren Homologen (pMDI) sowie die Hydrierungsprodukte (HMDI) der vorgenannten Isocyanate in Betracht. Bevorzugt sind 4,4'-MDI, 2,4'-MDI und 2,2'-MDI, insbesondere 4,4'-MDI und 4,4'-HMDI.

Die vorgenannten Isocyanate werden in Form von NCO-Prepolymeren h) zur Herstellung der Polyurethane mit den genannten Polyolen a), den Kettenverlängerern b) und den Polyetherpolyolen c) umgesetzt, wobei die eingesetzten NCO-Prepolymere einen NCO-Gehalt von höchstens 28 %, bevorzugt 14 bis 28 %, besonders bevorzugt 16 bis 26 % aufweisen.

Selbstverständlich können aus der Polyurethanchemie bekannte Hilfs- und/oder Zusatzstoffe g) eingesetzt werden, wie beispielsweise Tenside, Treibmittel, Flammschutzmittel, Füllstoffe, Alterungsschutzmittel, Trennmittel, Farbmittel, Biocide und Antistatika. Die einzusetzenden Mengen solcher Hilfs- und/oder Zusatzstoffe richten sich nach dem jeweiligen Einsatzzweck der hergestellten Polyurethanelastomere bzw. des damit hergestellten Mehrschichtsystems und können leicht durch entsprechende Vorversuche ermittelt werden. Solche Hilfs- und/oder Zusatzstoffe sind ebenfalls in dem zuvor erwähnten Kunststoffhandbuch erwähnt und beschrieben.

Für die Bestimmung des TVOC (totale volatile organic components) -Gehaltes erfolgt die Angabe der Prüfkammerkonzentration in Toluoläquivalent pro Norm m³ [µg TÄ/Nm³], indem die Gesamtfläche des Chromatogramms auf das analytische Fenster des Toluols bezogen wird. Es wird die gesamte Fläche im Chromatogramm zwischen n-Hexan und n-Hexadecan zur Bestimmung der TVOC betrachtet.

Die Polyole A), die im Polyurethan für die mittlere Kernschicht verwendet werden, können zum Beispiel Polyetherpolyole, Polyesterpolyole, Polyesterpolyetherpolyole sein, die durch in der Literatur beschriebene Methoden hergestellt werden können. Polyesterpolyole werden zum Beispiel durch Polykondensation von Dicarbonsäure-Äquivalenten (beipielsweise Phthalsäureanhydrid)und Polyolen niedriger Molmasse hergestellt. Polyetherpolyole werden durch Polyaddition (anionisch oder kationisch) von Epoxiden an Startermoleküle hergestellt. Bevorzugte Epoxide sind 1 ,2-Butylenoxid, 2,3-Butylenoxid, Ethylenoxid und Propylenoxid und Abmischungen daraus. Die Addition von Epoxiden an Polyesterpolyole führt zu Polyesterpolyetherpolyolen. Bei Bedarf können dem Fachmann bekannte Katalysatoren verwendet werden.
Als Polyisocyanate B) können alle an sich bekannten aromatischen Isocyanate eingesetzt werden.
Als aromatische Isocyanatkomponente B) für das Polyurethan der mittleren Kernschicht sind z. B. aromatische Polyisocyanate, wie sie z. B. von W. Siefken in Justus Liebigs Annalen der Chemie, 562, Seiten 75 bis 136, beschrieben werden, beispielsweise solche der Formel Q(NCO)n, in der n 2 bis 4, vorzugsweise 2, und Q einen aromatischen Kohlenwasserstoffrest mit 6 bis 15, vorzugsweise 8 bis 13, C-Atomen bedeuten; z. B. solche Polyisocyanate, wie sie in der DE-OS 28 32 253, Seiten 10 bis 11, beschrieben werden.
Besonders bevorzugt werden in der Regel die technisch leicht zugänglichen Polyisocyanate, z. B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI").
Ein physikalisches Treibmittel C) ist eine Komponente oder eine Mischung aus Komponenten, die bei Raumtemperatur flüchtig sind und nicht mit der Isocyanatkomponente reagieren. Bevorzugt werden als Komponente C) n-Pentan, iso-Pentan, cyclo-Pentan und Gemische daraus und Fluorkohlenwasserstoffe eingesetzt.
Als Co-Treibmittel D) wird Wasser verwendet, bevorzugt in einer Menge zwischen 0,5 und 3,5 Gew.-%, bezogen auf die Polyolkomponente A besonders bevorzugt zwischen 1,5 und 2,5 Gew.-%. Als Katalysatoren E) können im Bedarfsfall für den Fachmann bekannteAminkatalysatoren basierend auf tertiären Aminen zur Anwendung im Polyurethanhartschaum, eingesetzt werden.
Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Russ oder Schlämmkreide, können als Hilfs- und/oder Zusatzstoffe F) in der mittleren Kernschicht mitverwendet werden.
Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Farbstoffe und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 121 bis 205, beschrieben.
Die Polyurethan (PUR)-Hartschäume für die mittlere Kernschicht können nach dem in der Literatur bekannten einstufigen Verfahren hergestellt werden, indem die Reaktionskomponenten miteinander kontinuierlich oder diskontinuierlich reagieren. Die Mischung der Komponenten wird dabei in oder auf ein geeignetes Substrat oder Form aufgetragen. Beispiele findet man in G. Oertel (Herausgeber) "Kunststoff-Handbuch", Volume VII, Carl Hanser Verlag, 3. Auflage, München 1993, Seiten 267ff. und in K. Uhlig (Herausgeber) "Polyurethan Taschenbuch", Carl Hanser Verlag, 2. Auflage, Wien 2001, Seiten 83-102.
Die äußere Schicht besteht aus einer Kunststoff-, Lack-, Papier- , Glas-, Keramik- oder Metallschicht.
Die Schicht aus Kunststoff kann z.B. eine Folie oder eine Platte aus ABS, PCS, Polystyrol, modifiziertem Polystyrol oder Polypropylen sein. Die Metallschicht kann z.B. Aluminiumblech, Stahlblech, Edelstahl oder verzinktes Stahlblech sein.

Ein weiterer Gegenstand der Erfindung ist ein Verfahren zur Herstellung des erfindungsgemäßen Mehrschichtsystems, welches mindestens drei Schichten aufweist, wobei
1) die zweite äußere Schicht (2) mittels RIM-Verfahren (reaction injection molding) aus der Mischung der Komponenten a) bis h) innerhalb einer Reaktionszeit von ≤ 5 sec. hergestellt wird,
2) die zweite äußere Schicht (2) und die erste äußere Schicht (1) so in eine Schäumform eingelegt werden, dass sich ein Hohlraum zwischen den beiden Schichten bildet,
3) der Hohlraum aus Schritt 2) anschließend mit dem Reaktionsgemisch aus den Komponenten A) bis F) für den Polyurethanhartschaum ausgeschäumt wird, so dass sich die mittlere Kernschicht ausbildet,
4) das Produkt aus Schritt 3) aus der Schäumform entnommen wird.

Die Komponenten a) bis h) werden in einem sogenannten Mischkopf vermischt. Die Reaktionszeit in Schritt 1) ist die Zeit nach Verlassen des Mischkopfs bis zum Aushärten der Reaktionsmischung.
Bei dem flächigen Mehrschichtsystem kann die Stirnseite oder können die Stirnseiten offen sein, so dass man die drei Schichten im Querschnitt sehen kann. Optional kann auf die offene Stirnseite oder mindestens auf eine der offenen Stirnseiten zwischen Verfahrensschritt 2) und 3) oder nach der Entnahme (nach Schritt 4)) eine Abdeckung aus Polyurethan angebracht werden. Das Polyurethan der Abdeckung kann beispielsweise mit dem Polyurethan der zweiten äußeren Schicht (2) identisch sein.

Ein weiterer Gegenstand der vorliegenden Erfindung ist die Verwendung der erfindungsgemäßen Mehrschichtsysteme zur Herstellung von Automobil- oder Nutzfahrzeugteilen, von Haushaltsgeräten, Gehäusen, Rahmenteilen und Behältern.

Die Erfindung soll anhand der nachfolgenden Beispiele näher erläutert werden.

### Beispiele

### Ausgangskomponenten für die zweite äußere Schicht (2):

a) Polyole:
   Polyol 1:
      Polyetherpolyol der OH-Zahl 28, erhältlich durch Addition von Propylenoxid und Ethylenoxid (im Verhältnis 80:20) an Trimethylolpropan als Starter mit 90 % primären OH-Gruppen. Funktionalität: 3; Molmasse: 6000g/mol;
   Polyol 2:
      Polyetherpolyol der OH-Zahl 35, erhältlich durch Addition von Propylenoxid und Ethylenoxid (im Verhältnis 80:20) an Trimethylolpropan als Starter mit 90 % primären OH-Gruppen. Funktionalität: 3, Molmasse: 4800g/mol;
b) Ethylenglykol
c) Polyetherpolyol mit einer OH-Zahl von 550, Funktionalität von 3, Molmasse 305 g/mol
d) Katalysatoren: Dabco T9 (Zinnoctoat)
   Fomrez UL32 (Dioctylzinnmercaptid)
   Dabco DMEA (Dimethylethanolamin)
e) Titandioxid-basierte Weißpasten: White Remap 10007 (etwa 50 Gew.-% TiO₂)
   Moltopren MP61005/1322 (ca. 60 Gew.-% TiO₂)
f) UV-Absorber: Tinuvin B75; Mischung aus Antioxidans (Irganox 1135) und gehinderten Aminen (Tinuvin 765) und UV-Absorber (Tinuvin 571; 2-(2H-benzotriazol-2-yl)-6-dodecyl-4-methylphenol)
   Tinuvin 622; gehindertes Amin (Poly-(N-Beta-hydroxyethyl-2,2,6,6-tetramethyl-4-hydroxy-piperidyl succinat)
   Milestab 234-PD (Triazol); 2-(2H-Benzotriazol-2-yl)-4,6-bis(1-methyl-1-phenylethyl)phenol
h) Prepolymer:
   Prepolymer (PREP) mit einem NCO-Gehalt von 23 %, erhältlich aus zu 86,15 % 4,4'-Diisocyanatodiphenylmethan mit 33,5 % NCO-Gehalt und 13,85 % Tripropylenglykol

In Tabelle 1 sind die Komponenten und ihre Mengen für die Herstellung des Polyurethans der zweiten äußeren Schicht (2) beschrieben.

**Tabelle 1:**

| | Beispiel 1 (erfindungsgemäß) | Beispiel 2 (Vergleichsbeispiel) | Beispiel 3 (Vergleichsbeispiel) | Beispiel 4 (Vergleichsbeispiel) |
|---|---|---|---|---|
| Komponenten | [Gew.-%] | [Gew.-%] | [Gew.-%] | [Gew.-%] |
| Polyol 1 | 31,7 | 75,53 | 38,92 | 38,92 |
| Polyol 2 | 31,7 | 0,00 | 38,92 | 38,92 |
| Ethylenglykol | 17,9 | 19,15 | 18,79 | 18,79 |
| Polyetherpolyol c) | 8,2 | | | |
| Moltopren-MP-61005/1322 | | 3,19 | 3,22 | 3,22 |
| White Remap 10007 | 6,1 | | | |
| Milestab 234-PD | 4,1 | | | |
| Tinuvin B75 | | 1,60 | | |
| Tinuvin 622 | | | | Nicht dispergierbar und nicht löslich |
| Dabco T9 | | 0,27 | | |
| Dabco DMEA | | 0,27 | | |
| Fomrez UL32 | 0,26 | | 0,16 | 0,16 |
| | | | | |
| Prepolymer PREP | 127,3 | 138,52 | 140,14 | 140,14 |

**Tabelle 1: ΔE nach UV-Belichtung gemäß DIN ISO 16474-2, Verfahren B**

| | ΔE nach 250h | ΔE nach 500h | |
|---|---|---|---|
| Beispiel 1 (erfindungsgemäß) | 8,1 | 10,5 | |
| Beispiel 2 (Vergleichsbeispiel) | | 23,0 | |
| Beispiel 3 (Vergleichsbeispiel) | | 42,1 | |
| Beispiel 4 (Vergleichsbeispiel) | | Nicht messbar | |
| HIPS* | | 9,4 | |

| | | | |
|---|---|---|---|
| *HIPS - High impact Polystyrol | | | |

Das erfindungsgemäße Beispiel 1 zeigte eine geringe Verfärbung nach 500h UV-Bestrahlung.

**Tabelle 3: Gesamtmigration gemäß EU 10/2011, Anhang V, Kapitel 3, Tabelle 3, Prüfung Nr. OM1; Dreifach-Bestimmung**

| **Lösemittel** | **Rückstand [mg/dm²]** | **Rückstand [mg/dm²]** | **Rückstand [mg/dm²]** |
|---|---|---|---|
| 3gew.-% Essigsäure | 2,0 | 2,3 | 2,0 |
| 10 vol.-% Ethanol | 2,0 | 1,6 | 1,6 |

An der erfindungsgemäßen zweiten äußeren Schicht (2) wurden Gesamtmigrationswerte kleiner 10mg/dm² nach Prüfung gemäß Verordnung (EU) Nr. 10/2011 Anhang V, Kapitel 3 , Tabelle 3 Prüfung Nr. OM1 in 3gew.-% Essigsäure und 10 vol.-% Ethanol gemessen.

Da die Werte für ΔE (UV-Stabilität) und für die Gesamtmigration nur von der zweiten äußeren Schicht (2) abhängen, wurden diese Werte direkt an der zweiten äußeren Schicht (2) bestimmt.

Die Kombination aus dieser zweiten äußeren Schicht (2) mit einer Kernschicht aus üblichem Polyurethanhartschaum und einer äußeren Schicht ergibt einen gut haftenden Dreischichtverbund mit guter mechanischer Stabilität und einer thermischen Leitfähigkeit λ<24mW/m^{∗}K gemäß DIN 52616 bei 24°C, die durch die Polyurethanhartschaumschicht bedingt ist.

## Patentansprüche

1. Mehrschichtsystem aus mindestens drei Schichten mit folgender Schichtenfolge: (i) einer ersten äußeren Schicht (1), (ii) einer mittleren Kernschicht aus einem Polyurethanhartschaum mit einer thermischen Leitfähigkeit λ≤24mW/m^{∗}K gemäß DIN 52616 bei 24°C und (iii) einer zweiten äußeren hydrolysebeständigen Polyurethanschicht (2), **dadurch gekennzeichnet, dass** das Polyurethan der zweiten äußeren Schicht (2) aus der Reaktion der folgenden Komponenten herstellbar ist:
einer Polyolkomponente bestehend aus
a) mindestens einem Polyol aus der Gruppe bestehend aus Polyetherpolyol, Polyesterpolyol und einem Gemisch daraus jeweils mit einem zahlenmittleren Molekulargewicht von 1000 bis 12000 g/mol und einer zahlenmittleren Funktionalität von mindestens 2,
b) mindestens einem glykolischen Kettenverlängerer mit zwei Hydroxylgruppen pro Molekül und einem Molekulargewicht von 62 bis 499 g/mol
c) mindestens einem Polyetherpolyol mit einer zahlenmittleren Funktionalität von 3 bis 6 und einem zahlenmittleren Molekulargewicht von 200 bis 900 g/mol
d) mindestens einem Katalysator
e) mindestens einem anorganischen Weißpigment, das im Polyol a) dispergierbar ist,
f) mindestens einem UV-Absorber aus der Triazolklasse, der im Polyol a) löslich oder dispergierbar ist,
g) gegebenenfalls Hilfs- und/oder Zusatzstoffen,
und einer Isocyanatkomponente bestehend aus
h) einem NCO-Prepolymeren mit einem NCO-Gehalt von höchstens 28 Gew.-%, basierend auf mindestens einem Polyisocyanat aus der Gruppe bestehend aus 4,4'-Methylendiphenyldiisocyanat (MDI), 2,2'-MDI, 2,4'-MDI, deren höheren Homologen, Gemischen daraus, 4,4'-Diisocyanatodicyclohexylmethan (HMDI), 2,2'-HMDI, 2,4'-HMDI, deren höhere Homologen und Gemische daraus und mindestens einem Polyol aus der Gruppe bestehend aus Polyetherpolyol, Polyesterpolyol und Gemischen daraus jeweils mit einem zahlenmittleren Molekulargewicht von 150 bis 12000 g/mol und einer zahlenmittleren Funktionalität von mindestens 2
wobei, bezogen auf die Summe der Komponenten a), b), c), d) und h) das Polyol a) in Mengen von 25 bis 50 Gew.-%, der Kettenverlängerer b) in Mengen von 6 bis 14 Gew.-%, das Polyetherpolyol c) in Mengen von 2-10 Gew.-%, der Katalysator d) in Mengen von 0,05 bis 0,5 Gew.-%, das anorganische Weißpigment e) in Mengen von 0,1 bis 5 Gew.-%, der UV-Absorber f) in Mengen von 0,1 bis 5 Gew.-% und die Isocyanatkomponente mit der Polyolkomponente in einem Verhältnis der NCO-Gruppen zu den OH-Gruppen von 0,9 bis 1,2 zu 1 eingesetzt werden und
wobei das Polyurethan einen TVOC (totale volatile organic components) -Gehalt von unter 3000µg TÄ/Nm³ gemäß DIN EN ISO 16000-9 nach 24h Lagerung bei Raumtemperatur und einem Luftwechsel von 0,5m³/h, einer Temperatur von 23°C und einer relativen Feuchte von 50% und einen ΔE -Wert von kleiner 13 nach 500h Belichtung gemäß DIN ISO 16474-2, Teil 2 Xenonbogenlampen, nach Verfahren B (Xenonbogenlampe mit Fensterglasfiltern, 50 W/m² Bestrahlungsstärke bei 300-400 nm, 38°C Probenraumtemperatur, 65°C Schwarzstandardtemperatur und 50% relative Luftfeuchte) aufweist,
und das Polyurethan der mittleren Kernschicht aus der Reaktion der folgenden Komponenten herstellbar ist:
A) mindestens einem Polyol aus der Gruppe bestehend aus Polyether-, Polyester- und Polyesterpolyetherpolyolen
B) aromatischen Polyisocyanaten
C) physikalischen Treibmitteln
D) Wasser
E) gegebenenfalls Katalysatoren
F) gegebenenfalls Hilfs- und/oder Zusatzstoffen
wobei das Polyurethan der mittleren Kernschicht chemisch nicht mit dem Polyurethan der zweiten äußeren Schicht (2) identisch ist.

2. Verfahren zur Herstellung des Mehrschichtsystems gemäß Anspruch 1, welches mindestens drei Schichten aufweist, wobei
1) die zweite äußere Schicht (2) mittels RIM-Verfahren (reaction injection molding) aus der Mischung der Komponenten a) bis h) innerhalb einer Reaktionszeit von ≤ 5 sec. hergestellt wird,
2) die zweite äußere Schicht (2) und die erste äußere Schicht (1) so in eine Schäumform eingelegt werden, dass sich ein Hohlraum zwischen den beiden Schichten bildet,
3) der Hohlraum aus Schritt 2) anschließend mit dem Reaktionsgemisch aus den Komponenten A) bis F) für den Polyurethanhartschaum ausgeschäumt wird, so dass sich die mittlere Kernschicht ausbildet
4) das Produkt aus Schritt 3) aus der Schäumform entnommen wird.

3. Verwendung des Mehrschichtsystems gemäß Anspruch 1 zur Herstellung von Automobil- oder Nutzfahrzeugteilen, von Haushaltsgeräten, Gehäusen, Rahmenteilen und Behältern.

## Claims

1. Multilayer system made of at least three layers with the following layer sequence: (i) a first exterior layer (1), (ii) a middle core layer made of a rigid polyurethane foam with thermal conductivity λ≤24mW/m*K in accordance with DIN 52616 at 24°C and (iii) a second exterior hydrolysis-resistant polyurethane layer (2), **characterized in that** the polyurethane of the second exterior layer (2) can be produced from the reaction of the following components:
a polyol component consisting of
a) at least one polyol from the group consisting of polyether polyol, polyester polyol and a mixture thereof respectively with number-average molar mass from 1000 to 12 000 g/mol and number-average functionality of at least 2,
b) at least one glycolic chain extender having two hydroxyl groups per molecule and molar mass from 62 to 499 g/mol,
c) at least one polyether polyol with number-average functionality from 3 to 6 and number-average molar mass from 200 to 900 g/mol,
d) at least one catalyst,
e) at least one inorganic white pigment which is dispersible in the polyol a),
f) at least one triazole-class UV absorber which is soluble or dispersible in the polyol a),
g) optionally auxiliary and/or additional substances,
and an isocyanate component consisting of
h) an NCO prepolymer with at most 28% by weight NCO content, based on at least one polyisocyanate from the group consisting of methylenediphenyl 4,4'-diisocyanate (MDI), 2,2'-MDI, 2,4'-MDI, higher homologs of these, mixtures thereof, 4,4'-diisocyanatodicyclohexylmethane (HMDI), 2,2'-HMDI, 2,4'-HMDI, higher homologs of these and mixtures thereof, and at least one polyol from the group consisting of polyether polyol, polyester polyol and mixtures thereof respectively with number-average molar mass from 150 to 12 000 g/mol and with number-average functionality of at least 2,
where, based on the entirety of components a), b), c), d) and h), the quantities used of the polyol a) are from 25 to 50% by weight, the quantities used of the chain extenders b) are from 6 to 14% by weight, the quantities used of the polyether polyol c) are from 2 to 10% by weight, the quantities used of the catalyst d) are from 0.05 to 0.5% by weight, the quantities used of the inorganic white pigment e) are from 0.1 to 5% by weight, the quantities used of the UV absorbers f) are from 0.1 to 5% by weight, and the ratio of the NCO groups in the isocyanate component to the OH groups in the polyol component is from 0.9:1 to 1.2:1, and
where the TVOC (total volatile organic components) content of the polyurethane is below 3000µg TÄ/Nm³ in accordance with DIN EN ISO 16000-9 after storage for 24h at room temperature with air change rate 0.5m³/h, temperature 23°C and relative humidity 50%, and a ΔE of the polyurethane is smaller than 13 after irradiation for 500h in accordance with DIN ISO 16474-2, part 2 xenon arc lamps, in accordance with method B (xenon arc lamp with window glass filters, intensity of irradiation 50 W/m² at from 300 to 400 nm, sample space temperature 38°C, black standard temperature 65°C and relative humidity 50%),
and the polyurethane of the middle core layer can be produced from the reaction of the following components:
A) at least one polyol from the group consisting of polyether polyols, polyester polyols and polyester polyether polyols
B) aromatic polyisocyanates
C) physical blowing agents
D) water
E) optionally catalysts,
F) optionally auxiliary and/or additional substances,
where the polyurethane of the middle core layer is not chemically the same as the polyurethane of the second exterior layer (2) .

2. Process for the production of the multilayer system according to Claim 1, which has at least three layers, where
1) the second exterior layer (2) is produced by means of RIM processes (reaction injection molding) from the mixture of components a) to h) within a reaction time ≤ 5 sec.,
2) the second exterior layer (2) and the first exterior layer (1) are inserted into a foaming mold in a manner such that a cavity is formed between the two layers,
3) the cavity from step 2) is then foam-filled with the reaction mixture made of components A) to F) for the rigid polyurethane foam in a manner such that the middle core layer is formed, and
4) the product from step 3) is removed from the foaming mould.

3. Use of the multilayer system according to Claim 1 for the production of automobile parts or of commercial-vehicle parts, of household equipment, of housings, of frame parts and of containers.

## Revendications

1. Système multicouche constitué par au moins trois couches selon la séquence de couches suivante : (i) une première couche extérieure (1), (ii) une couche de noyau centrale en une mousse dure de polyuréthane ayant une conductivité thermique λ ≤ 24 mW/m*K selon DIN 52616 à 24 °C et (iii) une deuxième couche de polyuréthane extérieure résistante à l'hydrolyse (2), **caractérisé en ce que** le polyuréthane de la deuxième couche extérieure (2) peut être fabriqué par la réaction des composants suivants :
un composant polyol constitué par :
a) au moins un polyol du groupe constitué par le polyéther-polyol, le polyester-polyol et un mélange de ceux-ci, ayant chacun un poids moléculaire moyen en nombre de 1 000 à 12 000 g/mol et une fonctionnalité moyenne en nombre d'au moins 2,
b) au moins un allongeur de chaîne glycolique contenant deux groupes hydroxyle par molécule et ayant un poids moléculaire de 62 à 499 g/mol,
c) au moins un polyéther-polyol ayant une fonctionnalité moyenne en nombre de 3 à 6, et un poids moléculaire moyen en nombre de 200 à 900 g/mol,
d) au moins un catalyseur,
e) au moins un pigment blanc inorganique, qui peut être dispersé dans le polyol a),
f) au moins un absorbeur UV de la classe des triazoles, qui peut être dissous ou dispersé dans le polyol a),
g) éventuellement des adjuvants et/ou des additifs,
et un composant isocyanate, constitué par :
h) un prépolymère de NCO ayant une teneur en NCO d'au plus 28 % en poids, à base d'au moins un polyisocyanate du groupe constitué par le diisocyanate de 4,4'-diphénylméthylène (MDI), le 2,2'-MDI, le 2,4'-MDI, leurs homologues supérieurs, les mélanges de ceux-ci, le 4,4'-diisocyanatodicyclohexylméthane (HMDI), le 2,2'-HMDI, le 2,4'-HMDI, leurs homologues supérieurs et les mélanges de ceux-ci, et au moins un polyol du groupe constitué par le polyéther-polyol, le polyester-polyol et les mélanges de ceux-ci, ayant chacun un poids moléculaire moyen en nombre de 150 à 12 000 g/mol et une fonctionnalité moyenne en nombre d'au moins 2, par rapport à la somme des composants a), b), c), d) et h), le polyol a) étant utilisé en quantités de 25 à 50 % en poids, l'allongeur de chaîne b) en quantités de 6 à 14 % en poids, le polyéther-polyol c) en quantités de 2 à 10 % en poids, le catalyseur d) en quantités de 0,05 à 0,5 % en poids, le pigment blanc inorganique e) en quantités de 0,1 à 5 % en poids, l'absorbeur UV f) en quantités de 0,1 à 5 % en poids, et le composant isocyanate et le composant polyol en un rapport entre les groupes NCO et les groupes OH de 0,9 à 1,2 sur 1, et
le polyuréthane présentant une teneur en COVT (composants organiques volatils totaux) de moins de 3 000 µg d'équivalents toluène/Nm³ selon DIN EN ISO 16000-9 après 24 h de stockage à température ambiante et un renouvellement de l'air de 0,5 m³/h, une température de 23 °C et une humidité relative de 50 %, et une valeur ΔE de moins de 13 après 500 h d'éclairage selon DIN ISO 16474-2, partie 2, avec des lampes à arc de xénon, selon le procédé B (lampe à arc de xénon avec filtres de vitre, 50 W/m², puissance de rayonnement à 300-400 nm, température ambiante de l'échantillon de 38 °C, température standard noire de 65 °C et 50 % d'humidité relative de l'air),
et le polyuréthane de la couche de noyau centrale pouvant être fabriqué par la réaction des composants suivants :
A) au moins un polyol du groupe constitué par les polyéther-, polyester- et polyester-polyéther-polyols,
B) des polyisocyanates aromatiques,
C) des agents gonflants physiques,
D) de l'eau,
E) éventuellement des catalyseurs,
F) éventuellement des adjuvants et/ou des additifs,
le polyuréthane de la couche de noyau centrale n'étant pas identique chimiquement au polyuréthane de la deuxième couche extérieure (2).

2. Procédé de fabrication du système multicouche selon la revendication 1, qui comprend au moins trois couches, selon lequel
1) la deuxième couche extérieure (2) est fabriquée par un procédé RIM (moulage par injection et réaction) à partir du mélange des composants a) à h) en un temps de réaction de ≤ 5 secondes,
2) la deuxième couche extérieure (2) et la première couche extérieure (1) sont disposées dans un moule de moussage de telle sorte qu'une cavité se forme entre les deux couches,
3) la cavité de l'étape 2) est ensuite moussée avec le mélange réactionnel des composants A) à F) pour la mousse dure de polyuréthane, de telle sorte que la couche de noyau centrale se forme,
4) le produit de l'étape 3) est extrait du moule de moussage.

3. Utilisation du système multicouche selon la revendication 1 pour la fabrication de parties de véhicules automobiles ou utilitaires, d'appareils ménagers, de boîtiers, de parties de cadres et de contenants.
